(19) Europäisches Patentamt

European Patent Office

Office européen des brevets

(11) EP 1 275 975 B1

(12) EUROPEAN PATENT SPECIFICATION

(45) Date of publication and mention
of the grant of the patent:
**07.06.2006 Bulletin 2006/23**

(51) Int Cl.:
*G01S 5/14* (2006.01)        *G01S 1/04* (2006.01)
*H04B 1/707* (2006.01)

(21) Application number: **02014984.5**

(22) Date of filing: **09.07.2002**

(54) **Quadrature multi-frequency ranging (QMFR) applied to GPS multipath mitigation**

Quadratur mehrfrequenz Entfernungsmessung für GPS-Mehrwegeverringerung

Télémètre multifréquences en quadrature appliquée à la restriction des trajets multiples gps

(84) Designated Contracting States:
**DE FR GB IT**

(30) Priority: **09.07.2001 US 303511 P**

(43) Date of publication of application:
**15.01.2003 Bulletin 2003/03**

(73) Proprietor: **ITT MANUFACTURING ENTERPRISES, INC.**
**Wilmington, Delaware 19801 (US)**

(72) Inventors:
• **Gilmour, Paul Arthur**
**Bloomfield,**
**New Jersey 07003 (US)**
• **McCrady, Dennis D.**
**Homdel,**
**New Jersey 07733 (US)**

(74) Representative: **Schwabe - Sandmair - Marx**
**Stuntzstrasse 16**
**81677 München (DE)**

(56) References cited:
**WO-A-01/10154**

• **MCCRADY D D ET AL: "MOBILE RANGING USING LOW-ACCURACY CLOCKS" IEEE TRANSACTIONS ON MICROWAVE THEORY AND TECHNIQUES, IEEE INC. NEW YORK, US, vol. 48, no. 6, June 2000 (2000-06), pages 951-957, XP000936752 ISSN: 0018-9480**
• **VAN NEE R D J ET AL: "The multipath estimating delay lock loop: approaching theoretical accuracy limits" POSITION LOCATION AND NAVIGATION SYMPOSIUM, 1994., IEEE LAS VEGAS, NV, USA 11-15 APRIL 1994, NEW YORK, NY, USA,IEEE, 11 April 1994 (1994-04-11), pages 246-251, XP010117738 ISBN: 0-7803-1435-2**
• **PETERSON B B ET AL: "SPREAD SPECTRUM INDOOR GEOLOCATION" NAVIGATION, INSTITUTE OF NAVIGATION, WASHINGTON, DC, US, vol. 45, no. 2, 1998, pages 97-102, XP001012492 ISSN: 0028-1522**
• **BUCHLER R J ET AL: "Design and test of a synergistic interferometric GPS-INS" POSITION LOCATION AND NAVIGATION SYMPOSIUM, 1996., IEEE 1996 ATLANTA, GA, USA 22-26 APRIL 1996, NEW YORK, NY, USA,IEEE, US, 22 April 1996 (1996-04-22), pages 612-619, XP010163331 ISBN: 0-7803-3085-4**
• **BYE C T ET AL: "Development of a FOG-based GPS/INS" POSITION LOCATION AND NAVIGATION SYMPOSIUM, IEEE 1998 PALM SPRINGS, CA, USA 20-23 APRIL 1998, NEW YORK, NY, USA,IEEE, US, 20 April 1998 (1998-04-20), pages 264-271, XP010276862 ISBN: 0-7803-4330-1**

## Description

### FIELD OF THE INVENTION

The present invention relates to satellite communications and more particularly to Global Positioning System (GPS) or other Direct Sequence Spread Spectrum (DSSS) multipath mitigation techniques.

### BACKGROUND AND SUMMARY OF THE INVENTION

DSSS systems include GPS transmitter/receiver systems that perform time-of-arrival (T.O.A.) determinations between a DSSS transmitter (such as a GPS satellite) and a DSSS receiver (such as GPS user equipment). The present invention applies to all DSSS Systems, but will be described for convenience with request to a GPS system herein. Multipath problems within GPS systems are well known and take a variety of different forms including ground reflection, single reflection (diffraction), diffuse multipath, and mobility-induced errors. Each of these is discussed below:

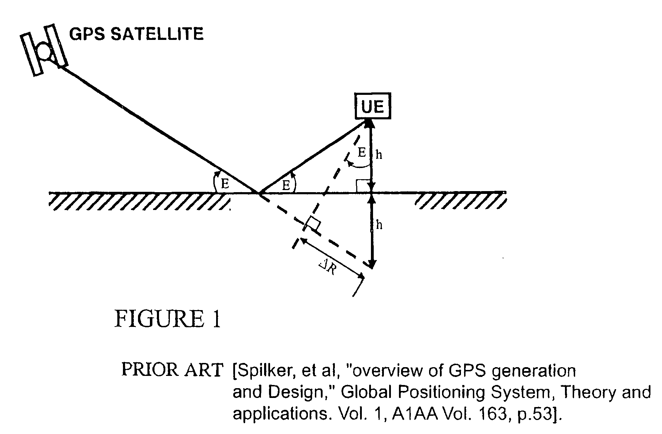

(1) Ground reflection. A strong multipath signal between a GPS satellite and a GPS user equipment (for example 100% reflected power) can originate from ground or sea surface reflections, as shown in Figure 1. If the angle E is a low elevation angle and/or the user altitude h is low, the multipath may be only slightly delayed from the main path between the GPS satellite and the user equipment. If the multipath delay is less than 1.5 chips, the multipath delay degrades the signal TOA estimation. For C/A-code, this condition occurs for:

$$\text{Delay} = \Delta R/c = 2h \sin E / c < 1.5 \ \mu s.$$

Ground or sea surface reflections and the effects thereof are described in Spilker, "Overview of GPS Operation and Design," at page 53. A typical behavior of the ground reflection error after smoothing as the satellite travels across the sky is described in Brenner, "GPS Landing System Multipath Evaluation Techniques and Results," at pages 1001-2.

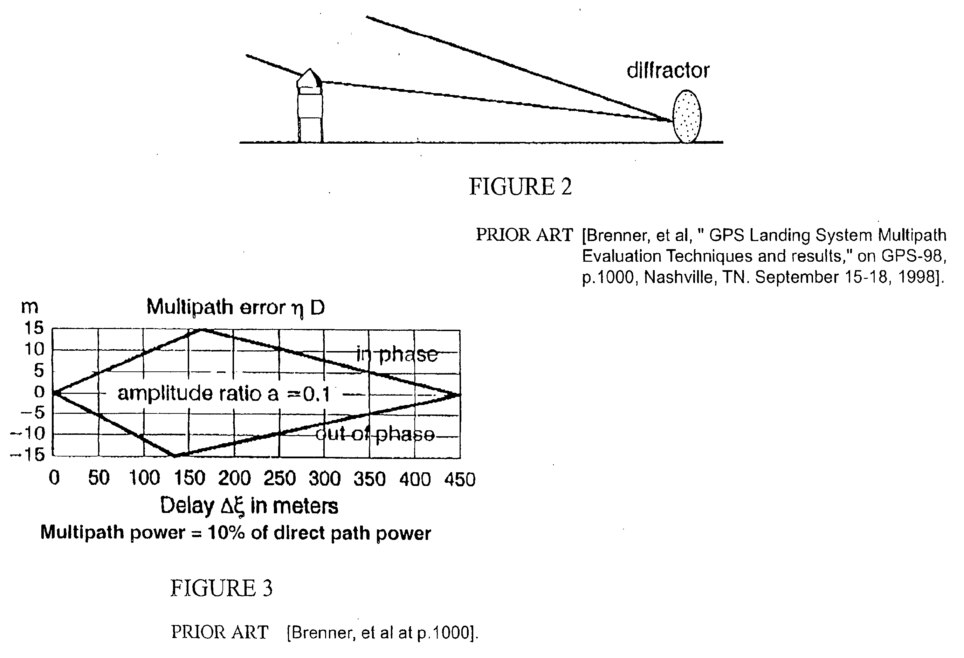

(2) Single Reflector (or Diffractor). Another multipath problem occurs when a single reflector or diffractor creates a multipath signal between the user equipment and the GPS satellite. Such a multipath problem is illustrated in Figure 2, where the main path signal (on top of Figure 2) and the multiple path (on the bottom of Figure 2) between a user equipment and GPS satellite are shown being created by the diffractor. Brenner, "GPS Landing System Multipath Evaluation Techniques and Results," at pages 1000-1001 also describes the resultant multipath-induced position error, which is reproduced by way of example in Figure 3.

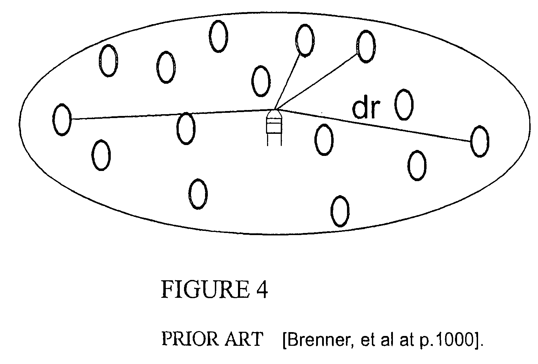

(3) Diffuse multipath. Another type of multipath problem occurs with uniformly scattered diffractors, as shown in Figure 4. In the case of uniformly scattered diffractors, the power equals $P_{diffr}$ ($0.2/dr^2$). The smoothed multipath error in the case of diffuse multipaths is described in Brenner at pages 1000-1001.

(4) Effect of mobility. Still another multipath problem that exists between GPS satellites and user equipment occurs as a result of mobility in the user equipment. According to Van Nee, "Multipath Effects on GPS Code Phase Measurements," at pages 179-180, the motion of the user equipment causes differences in Carrier Doppler frequencies between reflections in the line of sight of stationary users versus mobile users. That is, the fading bandwidth is determined by the Doppler differences, which varies substantially for stationary users versus mobile users. Further, reduction of the multipath error variance requires an averaging time much greater than 1/fading bandwidth. For stationary users, maximum Doppler difference is 0.6 Hz (and most users even experience much lower values). Mobile users, however, experience much higher fading bandwidth, e.g., for v = 15m/s, Doppler differences can take values up to 180 Hz. As a result, smoothing techniques require long time constants (on the order of 100 seconds) for stationary users but can use much shorter time constants for mobile users.

Still further multipath signal generation can be caused by terrain (such as) urban canyons and by signal reception within buildings.

There are current receiver technologies that attempt to mitigate the multipath disorders. Current GPS transmitter/receiver systems attempt to perform time of arrival determinations on the GPS spread spectrum waveform by (1) correlating the received signal with a replica of the transmitted signal and then (2) finding the time location of the peak magnitude of the correlation. They either locate the peak directly or by curve-fitting an ideal correlation function (a triangular pulse) with the actual received signal correlation function. Three recent systems for receiver technology improve the TOA estimation accuracy of the GPS receiver in a multipath environment:

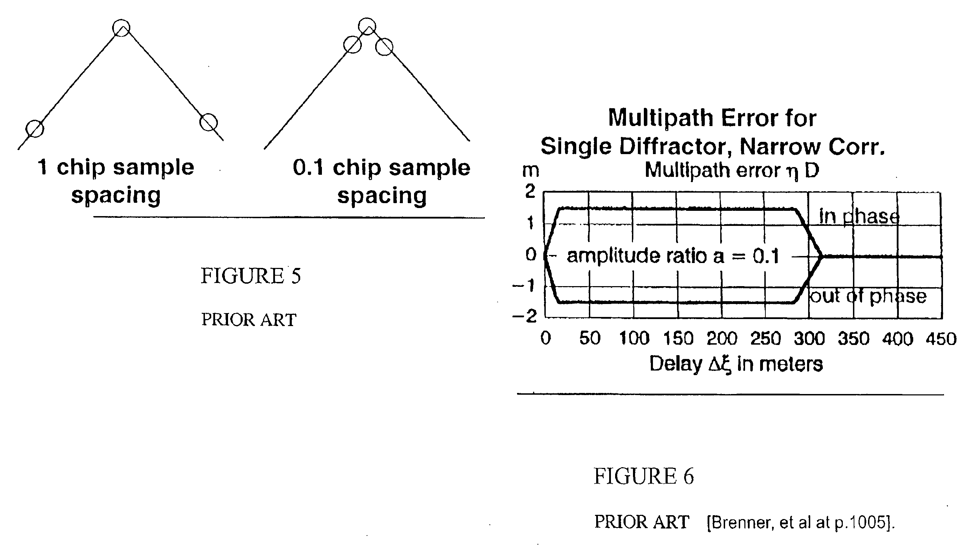

(a) Narrow correlator (Novatel™). The narrow correlator uses a correlator spacing of a fraction of a chip rather than chip-spaced correlators, as illustrated in Figure 5. Using a fraction of a chip greatly reduces the magnitude of the maximum TOA error in a multipath environment. The error reduction by the narrow correlator is described by Van Dierendonck et al., "Theory and Performance of Narrow Correlator Spacing in a GPS Receiver," at pages 265-283 and reproduced by way of summary in Figure 6. In Figure 6, the multipath error for a single diffractor, with narrow correlation is illustrated.

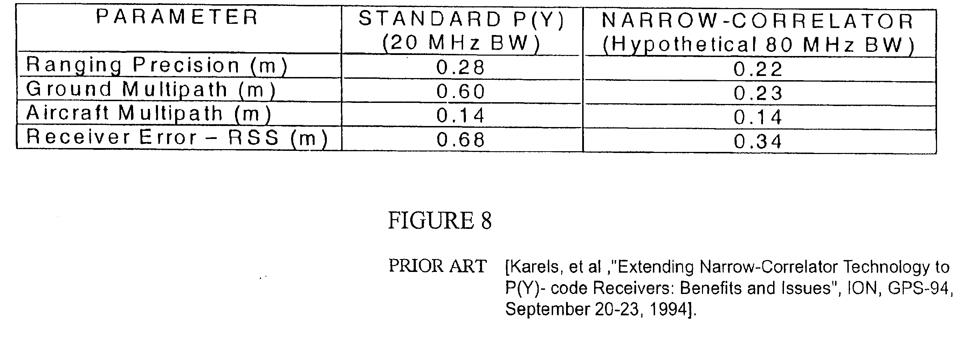

Others have extended narrow correlators to P (Y) code receivers, e.g., Karels, et al. "Extending Narrow-Correlator Technology to P(Y)-Code Receivers: Benefits and Issues," investigated using narrow-correlator techniques on P(Y)-code receivers. Karels et al opined that improvements in overall GPS receiver performance obtained in commercial GPS receivers over standard C/A-code receivers may be extended to P(Y)-code GPS receivers but only if the GPS space vehicle (SV) spectral output is permitted to increase. A table of Karels, et al., finding is reproduced as Figure 8.

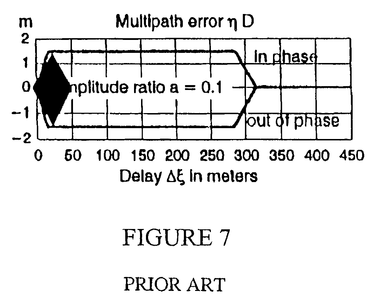

(b) Multipath estimating delay lock loop (MEDLL) (Novatel™). MEDLL makes multipath error correction by assuming that no more than two dominate multipath signals are present. It estimates the amplitude, delay, and phase of each multipath component using maximum likelihood criteria and then subtracts each estimated multipath correlated function from the measured correlation function. The remaining direct path correlation function has minimal multipath degradation, and it can be used for accurate TOA estimation. The technique is described by Towsend, et al., "Performance Evaluation of the Multipath Estimating Delay Lock Loop," and exhibits multipath error correction illustrated by way of summary in Figure 7. In practicality, the MEDLL technique gives performance that's comparable to a p-code receiver.

(c) Leading edge curve fitting. A third system for improving TOA estimation accuracy of a GPS receiver in a multipath environment is the leading edge curve fitting technique first used by the present assignee for W-sensor applications and for small unit operations programs. The leading edge curve fitting technique matches the receive signal correlation with an ideal correlation function on the leading edge of the received signal correlation. This minimizes the impact of any delayed multipath signals when computing the TOA, because the multipath has its greatest influence on the trailing edge of the correlation. An example of such a third system is disclosed in WO-A-0110154.

The preferred embodiment of the present invention provides a more useful receiver technology for improving the TOA estimation accuracy by utilizing a QMFR technique in the GPS application. This technique reduces the influence of close-in multipath components by examining the complex correlation function of the received signal rather than just the magnitude of the correlation function. It uses curve fitting on the complex correlation signal to locate the correlation peaks due to the main (undelayed) path in the delayed multipath component, and then measures the phase angle between those peaks.

BRIEF DESCRIPTION OF THE DRAWINGS

FIGURE 1 is a prior art illustration of the multipath problem addressed by the present invention;

FIGURES 2-3 are prior art illustrations of the single reflector multipath problem;

FIGURE 4 illustrates the diffuse multipath problem;

FIGURES 5-6 address the prior art narrow correlator technique to mitigate multipath problems;

FIGURE 7 illustrates multipath error correction by the prior art multipath estimating delay lock loop receivers;

ceivers;

FIGURE 8 illustrates the effect of narrow correlator techniques on P(Y)-code receivers;

FIGURES 9-19 illustrate a presently preferred technique for recognizing quadrature condition in most GPS receivers in accordance with an example aspect of the present invention;

FIGURE 20 illustrates a receiver embodiment in accordance with an example embodiment of the present invention;

FIGURE 21 is a table of example benefits of embodiments of the present QMFR system;

FIGURE 22 is a table of recommended approaches for multipath mitigation in addition to narrow correlation; and

FIGURE 23 illustrates QMFR experimental effectiveness in addressing the multipath problem.

DETAILED DESCRIPTION OF A PRESENTLY PREFERRED EMBODIMENT

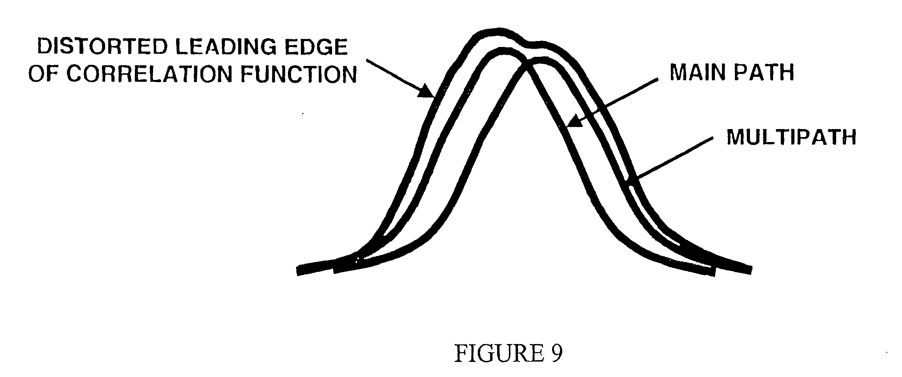

As shown in Figure 9, the TOA estimate is degraded by interference of delayed multipath signals with the correlation peak due to the undelayed main path signal, shown in Figure 9. This is particularly true for multipath signals that are delayed by less than 1.5 times the chip duration. Receivers other than the present invention, such as the narrow correlator, MEDLL, and leading edge curve fitting embodiments, do not improve performance as well as the present invention. Even when the above mentioned curve fitting on the leading edge of the received signal is used as a correlation function, the influence of a close-in multipath component is still severely degrading as to the TOA estimates. The narrow correlator and MEDLL techniques, although they significantly improve performance against multipath, still do not take advantage of the quadrature condition, as described below. Moreover, to extend the narrow correlator technique to work for P(Y)-code and M-code would require a large bandwidth increase in order to achieve significantly improved multipath performance.

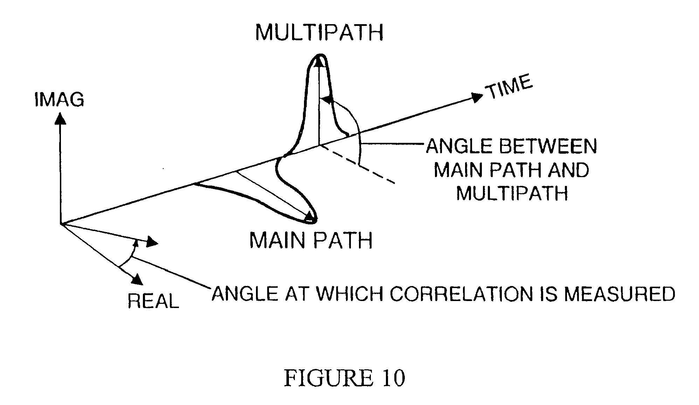

Thus, the presently preferred embodiment of the present invention utilizes the QMFR technique and extends it to application of the GPS multipath problem. The QMFR technique reduces the influence of close-in multipath components by examining the complex correlation function of the received signal rather than just the magnitude of the correlation function. Thus, as shown in Figure 10, the QMFR concept utilizes the complex correlation function in which the main path and multipath components arrive with arbitrary phase angles in the complex correlation. The preferred embodiment uses curve fitting on the complex correlation signal to locate the correlation peaks due to the main (undelayed) path and the delayed multipath component, and then measures the phase angle between these peaks.

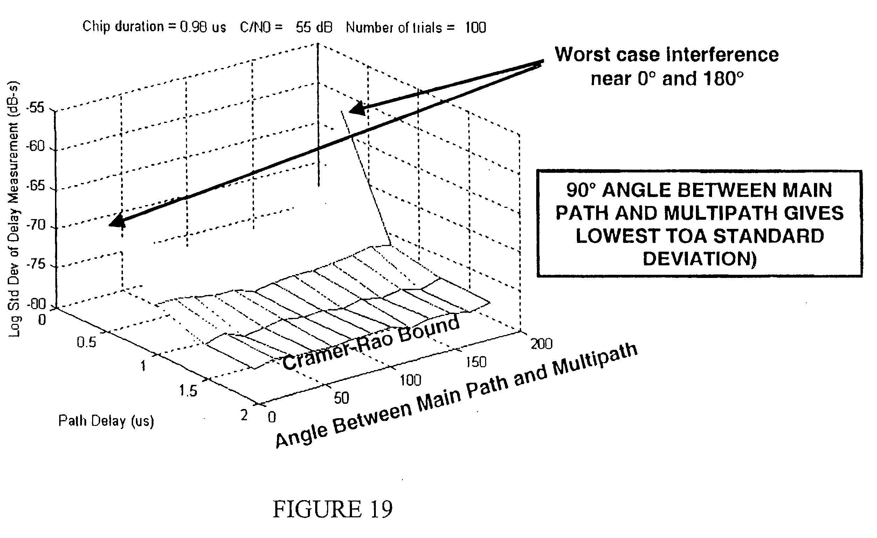

The preferred embodiment of the present invention applies first and second QMFR principles. The first QMFR principle (Q1) supposes that the best TOA estimate on the main path can be obtained when the delayed multipath component is at a 90 degree angle to the main path, as shown in Figure 19. Recognizing this first principle, the present invention utilizes the understanding that the main path and multipath components arrive with arbitrary phase angles in the complex correlation and that certain phase angles have less interference by the multipath component on the main path's leading edge. The present inventors have found that the best angle is 90 degrees and thus the QMFR concept of the preferred embodiment waits for this 90 degree angle condition to occur and then measures the TOA.

Thus, the preferred embodiment detects an instance when the 90 degree or "quadrature" condition occurs, and then does leading edge curve-fitting on the main path in the complex domain. This results in significantly higher TOA accuracy than leading edge curve fitting on the magnitude of the correlation function. Locating and utilizing the quadrature condition also gives improved performance over narrow correlator and MEDLL, which operate at arbitrary phase angles between the direct and multipaths. Also there is no increase in bandwidth necessary to use the quadrature condition for P(Y)-code or M-code, unlike what is required with narrow correlation.

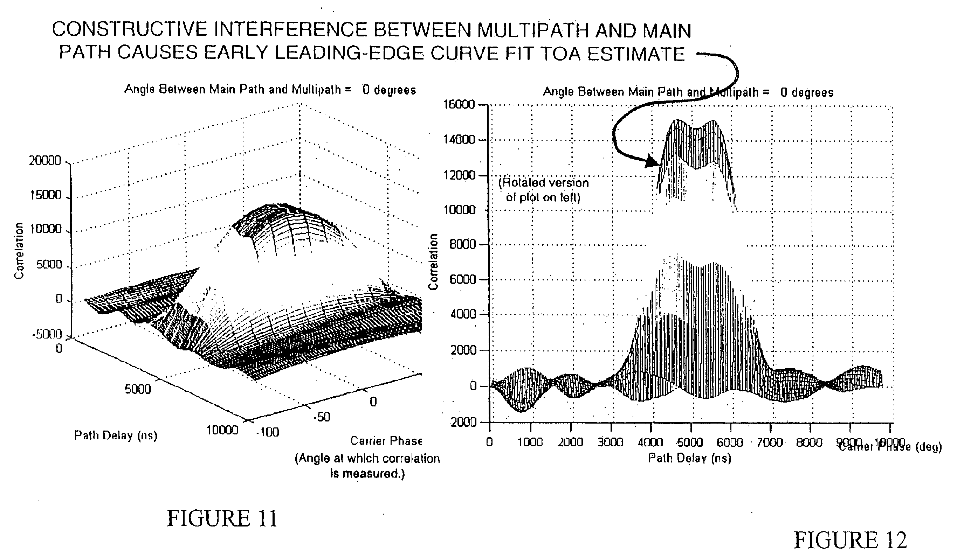

Figures 11-18 are graphical representations of the advantages gained by the present invention. Figure 11 and 12 are, respectively, three-dimensional and two-dimensional displays of the correlation function with the multipath delayed by 1.2 chips (using C/A code). In this embodiment, the angle between the main path and the multipath is 0 degrees. As shown, the constructive interference between the multipath and main path causes an early leading edge curve fit TOA estimate.

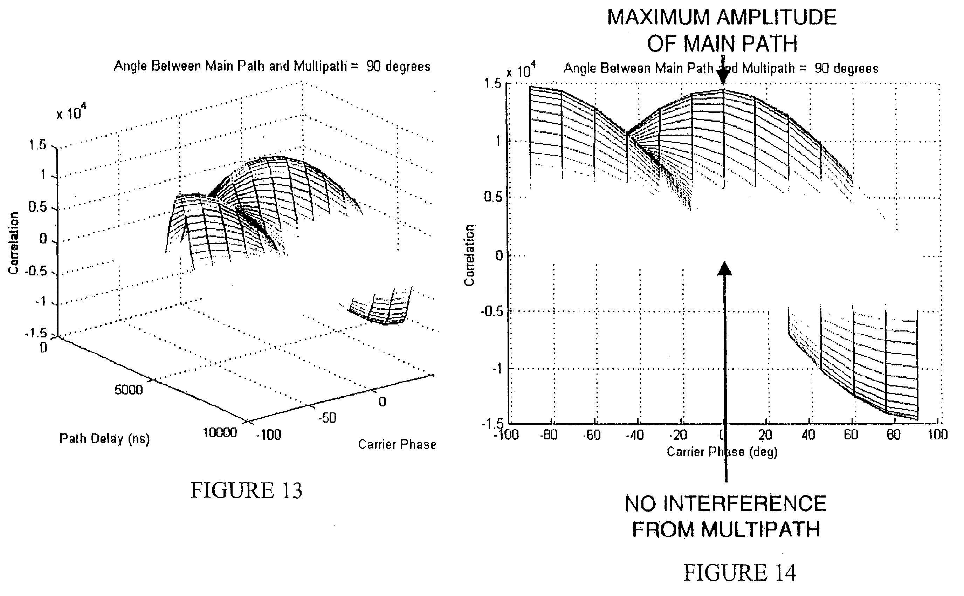

Figures 13 and 14 are similar three-dimensional and two-dimensional graphs illustrating the correlation function when the angle between the main path and the multipath is 90 degrees. As shown particularly in Figure 14, the maximum amplitude of the main path occurs with no interference from the multipath at the angle of 90 degrees.

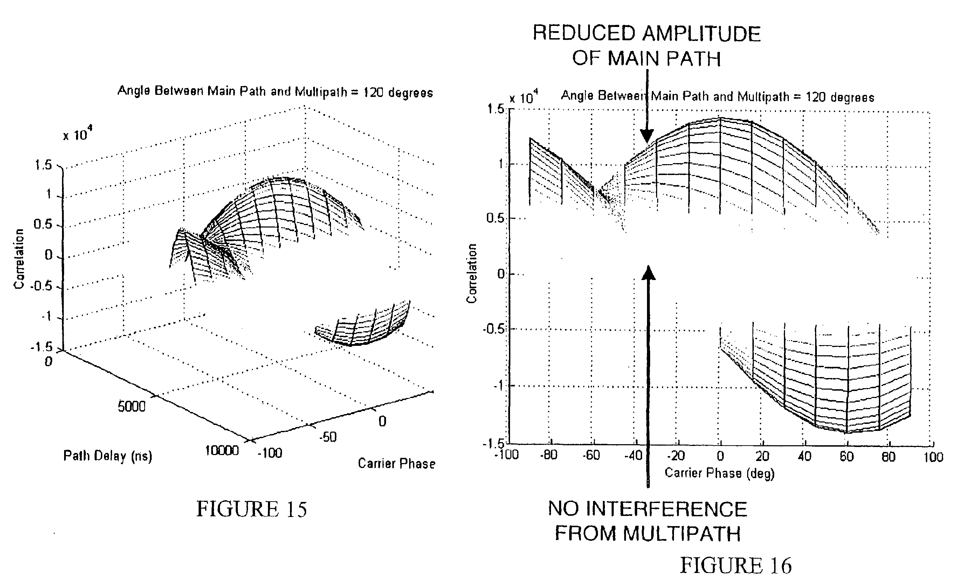

By comparison, Figures 15 and 16 are, respectively, three-dimensional and two-dimensional graphs where the angle between the main path and multipath is set at 120 degrees, rather than the 90 degrees shown in Figures 13 and 14. At 120 degrees, the main path amplitude is reduced, as particularly shown in Figure 16.

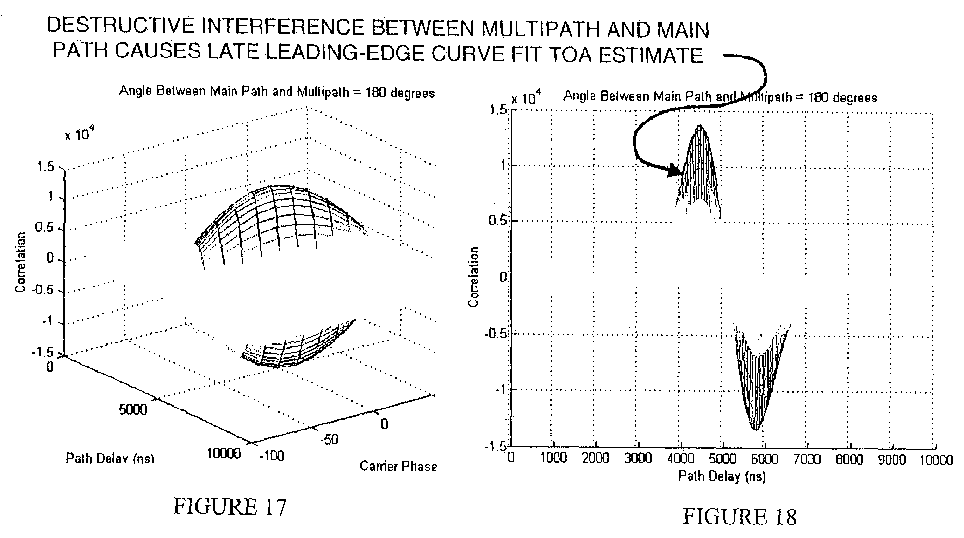

Finally, Figures 17 and 18 are three-dimensional and two-dimensional graphs, respectively, where the angle between the main path and multipath is 180 degrees. As shown in Figure 18, destructive interference occurs between the multipath and main path causing a late leading edge curve fit TOA estimate.

Figures 11 through 18 illustrate the optimal advantages gained when the multipath component is at 90 degrees to the main path. The phase angle between the main or multipath (delayed) signal is of course arbitrary, so only on occasion will this quadrature condition occur. The preferred embodiment of the present invention waits for the quadrature condition to arbitrarily occur and then does leading edge curve fitting on the main path in the complex domain based on the signals obtained at the general occurrence of the quadrature condition. As shown in Figure 19, the 90 degree angle between the main path and multipath gives the lowest TOA standard deviation. In theory, the quadrature condition can provide a TOA estimation brought to within a few dB of the Cramer-Rao bound. The present invention, as shown in Figure 19, can avoid TOA estimation degradations of 5-10 dB due to worst case interference between the main path and the multipath. In the example of Figure 19, the chip duration was set at .98 microseconds, C/NO = 55 dB, and the number of trials was 100. As shown, the worst case interference occurred near zero degrees and 180 degrees, and the lowest TOA standard deviation occurred when the main path and the multipath were 90 degrees to each other.

The preferred embodiment of the present invention in which the quadrature condition is awaited provides improved accuracy over the narrow correlator or MEDLL prior techniques, which operate at all arbitrary phase angles between the direct path and the multipath. Further, the presently preferred embodiment can employ even more rapid measurements than required for smoothing across phase angles for several cycles. Further, extension of improved accuracy of P(Y)-code or M-code receivers is also possible with the present invention, without demanding large increases in SV transmit bandwidth.

In an alternative embodiment, the present invention relies upon a second QMFR principle (Q2) as well, namely if a signal is transmitted at a series of frequencies, and the spread of these frequencies is sufficient, a quadrature (or near-quadrature) condition can be forced to occur. Recognizing from the first principle, that the quadrature condition is the optimum condition for obtaining the leading edge curve fitting on the main path in the complex domain, the principle of Q2 seeks to force that advantageous condition to occur. This principle recognizes that the angle between the main path and the multiple path will differ at different frequencies, but if the signal is transmitted at a series of frequencies and the spread of those frequencies is sufficient, the quadrature condition (or near-quadrature condition) will be forced to occur. For this, the required frequency spread is:
where $\Delta f$ is the required frequency spread and $\Delta t$ is the delay between the main path

$$\Delta f = \frac{1}{4\Delta t}$$

and the multipath. For example, to achieve quadrature condition for a multipath delay as small as ¼ chip of M-code would suggest:

$$\Delta t = (1/4)\,(1/(5\text{ MHz})) = 50\text{ ns},$$

and

$$\Delta f = 1/(4*50\text{ ns}) = 5\text{ MHz}.$$

This principle is applied by having the transmitter frequency hop at a series of frequencies that span the required frequency spread. Then, a suitably-equipped receiver receives the GPS signal on all these frequencies, looks at the phase angle between the direct and multipaths, and chooses the hop frequency which comes closest to achieving the quadrature condition. A TOA measurement made on this frequency will have the best separation between the direct path and the multipath, and on average will have the lowest TOA error.

Thus, in the waveform transmitter, which may be either a space vehicle, or pseudolite, the QMFR implementation is as follows:

(1) for C/A-code: the waveform frequency hops over $F_c$ +/- 1 MHz for 1/4 chip MP.
(2) for P(Y)-code: the waveform frequency hops over $F_c$ +/- 5 MHz for 1/4 chip MP.
(3) for M-code: the waveform frequency hops over $F_c$ +/- 2.5 MHz for 1/4 chip MP.

For P(Y) and M-code QMFR in space vehicles, the resultant waveform code exceeds the spectral allocation for GPS. Spectral spillover for M-code with QMFR will be limited to a small region because of the spot beam. The spot beam is a special focused energy beam transmitted from a special antenna located on the satellite, as opposed to the standard earth coverage GPS signal.

In pseudolite transmitters, pulsed operation minimizes interference with the signal from the space vehicle and reduces the effect of any spillover into frequency allocations other than those allocated to global navigation satellite system (GNSS).

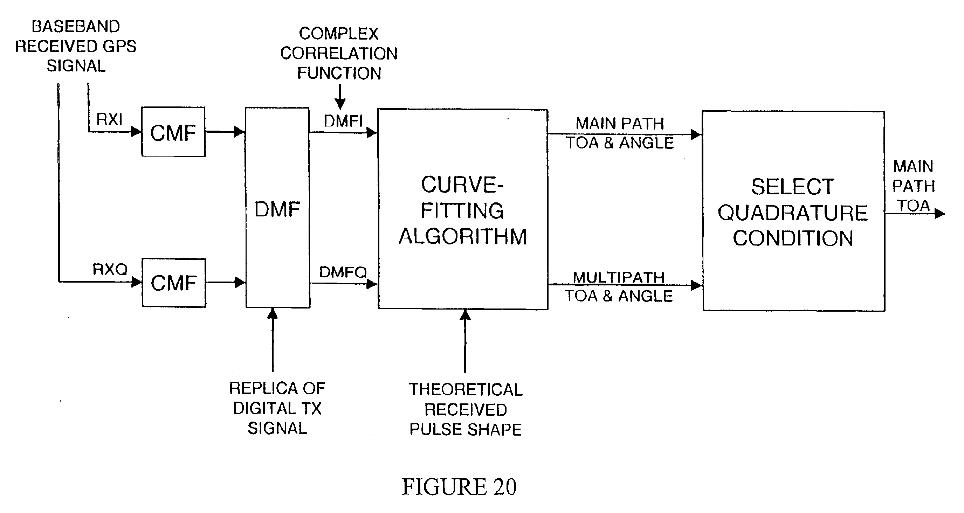

Figure 20 illustrates an example embodiment of a receiver employing aspects of the present invention. The receiver receives base band GPS signals "RXI" and "RXQ" and inputs them respectively into the chip matched filters (CMFs), which input them to the Digital Matched Filters (DMF), for correlation with a replica of the digital transmission signal. The output of the DMF is the complex correlation function DMFI and DMFQ. The complex correlation function is provided to the curve fitting algorithm portion, which also receives the theoretically received pulse shape. The curve fitting algorithm outputs main and multi path signals to the "select quadrature condition" portion (TOA and angle) where the quadrature condition is detected and timed for obtaining the TOA estimate. The select quadrature condition portion applies the principles of QMFR to obtain the main path TOA, in accordance with the principles previously identified.

The transmitter components include a standard GPS signal generator, RF frequency hopping device, which offsets the frequency of the transmitted GPS signal, and (for pseudolites only) a switching device to turn the transmitter rapidly on and off for pulsed operation.

The receiver components, shown in Figure 20, include the RF frequency hopping device, which offsets the frequency of the received GPS signal in synchronization with the frequency hopped transmit signal. Also, for reception of pseudolites only, a switching device to turn the receiver rapidly on and off in synchronization with the pulse transmitter is required. Then, the correlator device is included in the receiver that generates the base band in-phase and quadrature components of the correlation between the received signal and a replica of the digital transmitted signal (in DMF, Figure 20). The curve fitting device then implements the algorithm to determine amplitude, delay, and phase angle of (i) the direct signal and (ii) the largest of the delayed (multipath) signals. This occurs in the curve fitting algorithm box of Figure 20. Finally, the receiver includes the selection device which decides which frequency hop comes closest to yielding the quadrature condition, and a leading edge curve fitting algorithm that performs the TOA estimation. This is included in Figure 20 in the select quadrature condition box.

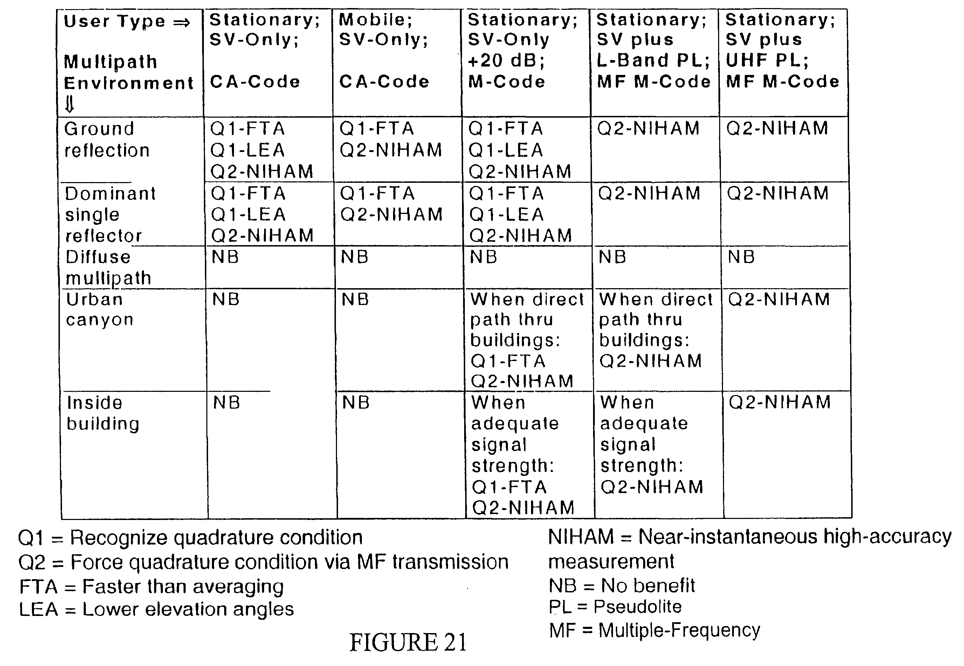

Figure 21 illustrates the benefits of the present invention in resolving different multipath environment problems. The multipath environments, discussed in the background previously, including ground reflection, dominant single reflector, etc., are shown in the vertical left column. The user type and code type are shown across the top of the table, including users that are stationary versus mobile, and using C/A-code, M-code, etc. As described previously, the reference "Q1" refers to application of the first principle of the QMFR technique, namely the recognition of the quadrature condition having occurred for optimal curve fitting. Similarly, "Q2" refers to the second QMFR principle, namely that the quadrature condition can be forced via multi-frequency (MF) transmission. The table indicates in which instances and for which multipath problems, Q1 and Q2 are found to be faster than averaging, better at lower elevation angles, near instantaneous high accuracy measurements, or no benefit. As shown in the table, each of the various benefits, together with the Q1 and Q2 principles are illustrated.

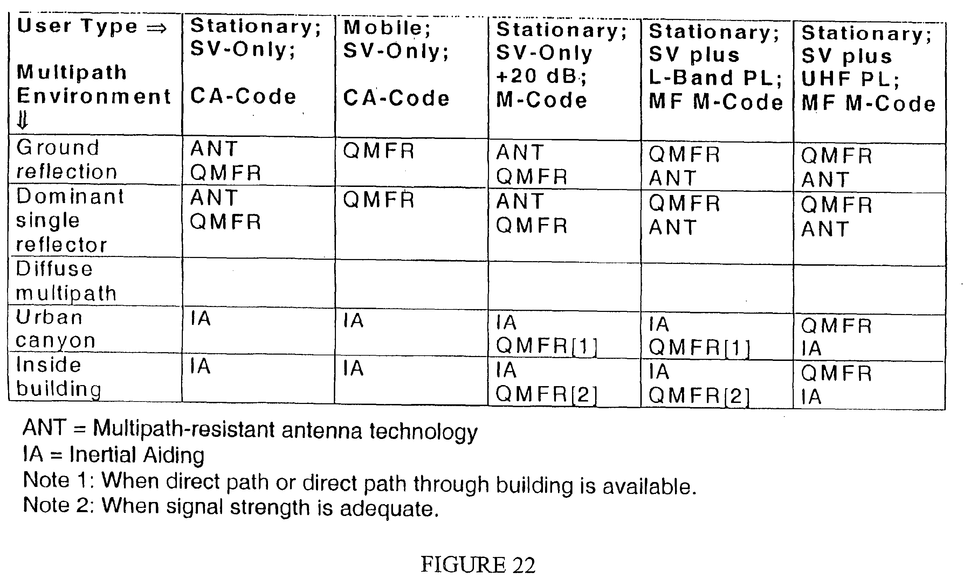

In Figure 22, recommended approaches for multipath mitigation, in addition to narrow correlation are shown. Again, the multipath problems are listed down the left vertical column and the user type and code types are listed across the horizontal top column. In Figure 22, some of the combinations are recommended for QMFR, others are recommended for a combination of multipath-resistant antenna technology (ANT) together with QMFR, and still others are recommended with inertial aiding (IA) with or without QMFR, as shown.

From a review of the detailed description herein, the artisan can recognize that using QMFR provides substantial advantages in multipath mitigation for GPS users. The first principle of QMFR, noted herein as Q1, recognizes the quadrature condition between direct and delayed path and offers a faster means to high-accuracy than smoothing multi-path effects. The second QMFR principle, Q2, forces the quadrature condition to occur via multiple frequency transmission, and provides near instantaneous high-accuracy measurements under many multipath conditions. QMFR, which combines Q1 and Q2, gives users significantly improved accuracy in many multipath environments, as illustrated in Figures 21 and 22. Further, QMFR, when transmitted via a UHF-band pseudolite, supports high-accuracy navigation in urban canyons and inside of buildings.

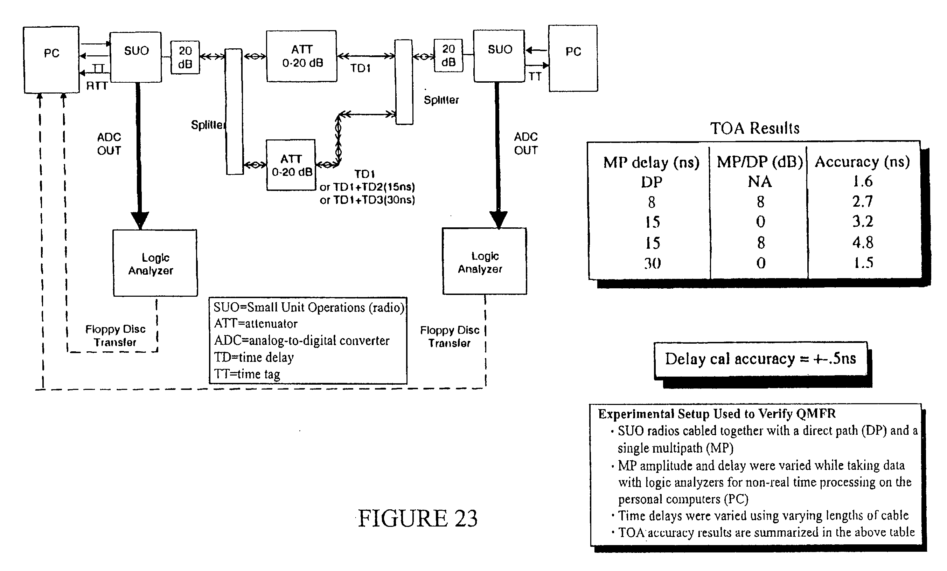

Results applicable to urban environments and inside buildings can be seen in Figure 23, where QMFR experimentation results are shown with respect to ITT's Small Unit Operation Situation Awareness System (SUO SAS or SUO) provided under contract to the Defense Advanced Research Projects Agency (DARPA). The experimental results show the QMFR provides accurate ranging with multipath as near in as 1/4 chip (chip rate of 32 Mcps). In Figure 23, the delay calibration accuracy was plus or minus 0.5 ns. Some differences between SUO and GPS are small unit operation signal levels being much higher due to closer range (1 km v. 10,000 km) and SUO signals being at UHF-band rather than L-band. This means that direct path signals can pass completely through some types of buildings and users can receive SUO signals even inside of buildings. Further, when using pseudolites, strong local area GPS signals can be provided with multiple frequencies to force the quadrature condition. Also, the UHF-band can be used for pseudolite signals to obtain better performance in urban environments. Both the urban and building environments are illustrated in Figures 21 and 22, as previously described.

The present invention can find application in a wide variety of different applications. First, receivers which detect the quadrature condition between the direct path of a delayed path (i.e., the multiple path) for the purpose of achieving better TOA measurement accuracy when the quadrature condition occurs, have immediate impact using the present invention. In fact, the normal motion of the satellites or motion of the receiver that causes variation in the phase angle between the direct and delayed paths can now be exploited to locate a quadrature or near quadrature condition and then perform TOA estimation with high-accuracy.

Further, transmitters which force the quadrature condition to occur also have application in the preferred embodiment of the present invention. By forcing the quadrature condition to occur, the following transmitters allow suitably equipped receivers to achieve high TOA measurement accuracy nearly instantaneously with multipath delay as close as ¼ chip (chip duration varying according to the code):

(i) satellite transmitter of C/A-code with frequency hopping over $F_c$ plus or minus 1 MHz;
(ii) satellite transmitter of P(Y)-code with frequency hopping over $F_c$ plus or minus 5 MHz;
(iii) satellite transmitter of M-code with frequency hopping over $F_c$ plus or minus 2.5 MHz;
(iv) pseudolite transmitter in the L-band of any of the GPS codes with frequency hopping, but especially of M-code with frequency hopping over $F_c$ plus or minus 2.5 MHz;
(v) pseudolite transmitter in the UHF-band of any of the GPS codes with frequency hopping, but especially of M-code with frequency hopping over $F_c$ plus or minus 2.5 MHz. The UHF band is chosen because of its superior penetration through and into buildings. This facilitates reception of GPS signals in urban canyons and inside buildings.

Finally, the present invention may find application in receivers which frequency hop along with the preceding transmitters, deciding which frequency hop comes closest to the quadrature condition, and then carrying out leading edge curve fitting to achieve high accuracy TOA estimation.

The receivers and transmitters described above are applicable for improved performance against multipath in all environments where GPS is used, including terrestrial, marine, airborne and space.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the scope of the appended claims.

**Claims**

1. A direct sequence spread spectrum, DSSS, receiver, comprising:

baseband receiving circuitry receiving baseband DSSS signals including direct path signals and multipath signals received at arbitrary phase angles;
a quadrature multi-frequency ranging, QMFR, processor circuit to receive signals indicative of the direct path signals and the multipath signals, to select readings from the direct path signals at times when a detection of.the arbitrary phase angles indicates that said arbitrary phase angles have approximated a quadrature condition, and to perform leading edge curve fitting on the selected direct path signals in the complex domain to thereby determine a time-of-arrival status associated with.the received baseband DSSS signals, and

the QMFR processor circuit including a) means to perform curve fitting on a complex correlation signal to locate a correlation peak due to the direct path signals and another correlation peak due to the multipath signals, and b) means to measure a phase angle between both correlation peaks;

wherein when the measured phase angle approximates the quadrature condition, the readings from the direct path signals are selected to perform the leading edge curve fitting for determining the time-of-arrival status.

2. A DSSS receiver according to claim 1, wherein:

the QMFR processor circuit selects readings from both the direct path signals and the multipath signals at said times when a detection of the arbitrary phase angles indicates that said arbitrary phase angles have approximated a quadrature condition, and performs curve fitting using both the selected direct path signals and the selected multipath signals in the complex domain to thereby determine a time-of-arrival status associated with the received baseband DSSS signals.

3. A DSSS receiver according to claim 1, wherein:

the baseband receiving circuit includes circuitry to receive the baseband DSSS signals at a series of different frequencies over a frequency spread that increases the occurrence of said arbitrary angle approximating the quadrature condition.

4. A method of mitigating multi path distortion in determining a time-of-arrival condition in a DSSS system, comprising the steps of:

receiving a direct path signal;
receiving a multipath signal;
determining a complex correlation function using complex components of both the direct path signal and the multipath signal;
performing curve fitting on the complex correlation function to locate a correlation peak due to the direct path signal and another correlation peak due to the multipath signal;
measuring a phase angle of the multipath component relative to a phase angle of the direct path component;
detecting a condition when said measured phase angle approximates a quadrature condition;

and determining the time-of-arrival condition only when said approximate quadrature condition is detected.

5. A method according to claim 4, further including the step of:

forcing the approximate quadrature condition to occur
wherein the forcing step includes:

receiving the baseband DSSS signals at a series of different frequencies over a frequency spread that increases the occurrence of said arbitrary angle approximating the quadrature condition.

6. The DSSS receiver, according to claim 1, wherein:

said baseband DSSS signals include a direct path signal deflected by an environmental condition to produce one or more additional multipath signals received at arbitrary phase angles to said direct path signal; and
the QMFR processor circuit determines the time-of-arrival status associated with the received baseband DSSS signals based on at least one of:

a) readings from the direct path and multipath signals taken at times when a detection of the arbitrary phase angles indicates that said arbitrary phase angles have approximated a quadrature condition, and
b) readings from the angles direct path and multipath signals taken after forcing said arbitrary phase angles to approximate a quadrature condition

7. A DSSS receiver according to claim 6, wherein:

said QMFR processor determines said time of arrival status based on both said a) and b) readings.

8. A DSSS receiver according to claim 6, wherein :

said QMFR processor selects said a) or b) readings based on a characteristic of said environmental condition.

9. A DSSS receiver according to claim 8, wherein said QMFR processor further characterizes said baseband receiving circuitry is stationary or mobile and selects said a) or b) readings based on said stationary or mobile characterization.

10. The DSSS according to claim 1 receiver further including a DSSS transmitter comprising:

a signal input to receive a first signal;
an encoder to accept the first signal and to encode the first signal by DSSS encoding; and
a transmitter to transmit the encoded first signal at a series of frequencies such that the spread of these frequencies is sufficient to force at least a near-quadrature condition to occur in the event of a multipath condition.

**Patentansprüche**

1. Direktfolgen-Spreizspektrum-Empfänger oder DSSS-Empfänger, der umfasst:

eine Grundband-Empfangsschaltungsanordnung, die Grundband-DSSS-Signale empfängt, die Direktpfadsignale und Mehrfachpfadsignale, die unter beliebigen Phasenwinkeln empfangen werden, enthalten; eine Quadratur-Mehrfachfrequenzbereichs-Prozessorschaltung oder QMFR-Prozessorschaltung, die Signale empfängt, die die Direktpfadsignale und die Mehrfachpfadsignale angeben, um Ablesungen von den Direktpfadsignalen zu Zeitpunkten auszuwählen, zu denen eine Detektion der beliebigen Phasenwinkel angibt, dass sich die beliebigen Phasenwinkel einer Quadraturbedingung annähern, und um eine Vorderflanken-Kurvenanpassung an den ausgewählten Direktpfadsignalen im komplexen Bereich auszuführen, um dadurch einen Ankunftszeitstatus zu bestimmen, der den empfangenen Grundband-DSSS-Signalen zugeordnet ist, und

wobei die QMFR-Prozessorschaltung umfasst: a) Mittel, um eine Kurvenanpassung an einem komplexen Korrelationssignal auszuführen, um den Korrelations-Peak, der durch die Direktpfadsignale bedingt ist, und einen weiteren Korrelations-Peak, der durch die Mehrfachpfadsignale bedingt ist, zu lokalisieren, und b) Mittel, um einen Phasenwinkel zwischen beiden Korrelations-Peaks zu messen; wobei dann, wenn sich der gemessene Phasenwinkel der Quadraturbedingung annähert, die Ablesungen von den Direktpfadsignalen ausgewählt werden, um die Vorderflanken-Kurvenanpassung auszuführen, um den Ankunftszeitstatus zu bestimmen.

2. DSSS-Empfänger nach Anspruch 1, bei dem:

die QMFR-Prozessorschaltung Ablesungen sowohl von den Direktpfadsignalen als auch von den Mehrfachpfadsignalen zu Zeitpunkten auswählt, zu denen eine Detektion der beliebigen Phasenwinkel angibt, dass die beliebigen Phasenwinkel angenähert eine Quadraturbedingung haben, und eine Kurvenanpassung sowohl unter Verwendung der ausgewählten Direktpfadsignale als auch unter Verwendung der ausgewählten Mehrfachpfadsignale im komplexen Bereich ausführt, um dadurch einen Ankunftszeitstatus zu bestimmen, der den empfangenen Grundband-DSSS-Signalen zugeordnet ist.

3. DSSS-Empfänger nach Anspruch 1, bei dem:

die Grundbandempfangsschaltung eine Schaltungsanordnung umfasst, um die Grundband-DSSS-Signale bei einer Reihe unterschiedlicher Frequenzen über eine Frequenzspreizung zu empfangen, die das Auftreten des beliebigen Winkels, der sich der Quadraturbedingung annähert, erhöht.

4. Verfahren zum Verringern einer Mehrfachpfadverzerrung bei der Bestimmung eines Ankunftszeit-Zustandes in einem DSSS-System, das die folgenden Schritte umfasst:

Empfangen eines Direktpfadsignals; Empfangen eines Mehrfachpfadsignals; Bestimmen einer komplexen Korrelationsfunktion unter Verwendung komplexer Komponenten sowohl des Direktpfadsignals als auch des Mehrfachpfadsignals; Ausführen einer Kurvenanpassung an der komplexen Korrelationsfunktion, um einen Korrelations-Peak, der durch das Direktpfadsignal bedingt ist und einen weiteren Korrelations-Peak, der durch das Mehrfachpfadsignal bedingt ist, zu lokalisieren; Messen eines Phasenwinkels der Mehrfachpfadkomponente in Bezug auf einen Phasenwinkel der Direktpfadkomponente; Detektieren eines Zustandes, wenn sich der gemessene Phasenwinkel einer Quadraturbedingung annähert; und Bestimmen der Ankunftszeit-Bedingung nur dann, wenn die angenäherte Quadraturbedingung detektiert wird.

5. Verfahren nach Anspruch 4, das ferner den folgenden Schritt umfasst:

Erzwingen des Auftretens der ungefähren Quadraturbedingung, wobei der Erzwingungsschritt umfasst:

Empfangen der Grundband-DSSS-Signale bei einer Reihe unterschiedlicher Frequenzen über eine Frequenzspreizung, die das Auftreten des beliebigen Winkels, der sich der Quadraturbedingung annähert, erhöht.

6. DSSS-Empfänger nach Anspruch 1, bei dem:

die Grundband-DSSS-Signale ein Direktpfadsignal enthalten, das durch eine Umgebungsbedingung abgelenkt wird, um ein oder mehrere zusätzliche Mehrfachpfadsignale zu erzeugen, die unter beliebigen Phasenwinkeln zu dem Direktpfadsignal empfangen werden; und die QMFR-Prozessorschaltung den Ankunftszeit-Status, der den empfangenen Grundband-DSSS-Signalen zugeordnet ist, wenigstens anhand

a) der Ablesungen von den Direktpfad- und Mehrfachpfadsignalen, die zu Zeitpunkten vorgenommen werden, zu denen eine Detektion der beliebigen Phasenwinkel angibt, dass sich die beliebigen Phasenwinkel einer Quadraturbedingung angenähert haben, und

b) der Ablesungen von den Direktpfad- und Mehrfachpfadsignalen, die vorgenommen werden, nachdem die beliebigen Phasenwinkel dazu gezwungen wurden, sich einer Quadraturbedingung anzunähern, bestimmt.

7. DSSS-Empfänger nach Anspruch 6, bei dem:

der QMFR-Prozessor den Ankunftszeit-Status sowohl anhand der a)-Ablesungen als auch der b)-Ablesungen bestimmt.

8. DSSS-Empfänger nach Anspruch 6, bei dem:

der QMFR-Prozessor die a)-Ablesungen oder b)-Ablesungen anhand einer Charakteristik der Umgebungsbedingung auswählt.

9. DSSS-Empfänger nach Anspruch 8, bei dem der QMFR-Prozessor die Grundbandempfangsschaltungsanordnung als stationär oder mobil kennzeichnet und die a)-Ablesungen oder b)-Ablesungen anhand der Kennzeichnung als stationär oder mobil auswählt.

10. DSSS-Empfänger nach Anspruch 1, der ferner einen DSSS-Sender umfasst, der seinerseits umfasst:

einen Signaleingang, um ein erstes Signal zu empfangen;
einen Codierer, um das erste Signal anzunehmen und um das erste Signal durch eine DSSS-Codierung zu codieren; und
einen Sender, um das codierte erste Signal mit einer Reihe von Frequenzen zu senden, derart, dass die Spreizung dieser Frequenzen ausreicht, um das Auftreten wenigstens einer ungefähren Quadraturbedingung bei Vorliegen einer Mehrfachpfadbedingung zu erzwingen.

**Revendications**

1. Récepteur à étalement du spectre en séquence directe DSSS, comprenant :

des circuits de réception de bande de base recevant des signaux DSSS de bande de base comportant des signaux à trajets directs et des signaux à trajets multiples reçus selon des angles de phase arbitraires ;
un circuit processeur de télémétrie multi fréquence en quadrature QMFR, afin de recevoir des signaux indicateurs des signaux à trajets directs et des signaux à trajets multiples, pour sélectionner des lectures des signaux à trajets directs aux moments où une détection des angles de phase arbitraires indique que lesdits angles de phase arbitraires ont approché une condition de quadrature, et afin d'effectuer un ajustement de courbe de front de montée sur les signaux à trajets directs sélectionnés dans le domaine complexe pour ainsi déterminer un état de moment d'arrivée associé aux signaux DSSS de bande de base reçus, et
le circuit processeur QMFR comportant a) un moyen destiné à effectuer un ajustement de courbe sur un signal de corrélation complexe afin de localiser un pic de corrélation causé par les signaux à trajets directs et un autre pic de corrélation causé par les signaux à trajets multiples, et b) un moyen destiné à mesurer un angle de phase entre les deux pics de corrélation ;
dans lequel, lorsque l'angle de phase mesuré approche la condition de quadrature, les lectures des signaux à trajets directs sont sélectionnées afin d'effectuer l'ajustement de courbe de front de montée pour déterminer l'état de moment d'arrivée.

2. Récepteur DSSS selon la revendication 1, dans lequel :

le circuit processeur QMFR sélectionne des lectures à la fois à partir des signaux à trajets directs et des signaux à trajets multiples auxdits moments lorsqu'une détection des angles de phase arbitraires indique que lesdits angles de phase arbitraires ont approché une condition de quadrature, et effectue un ajustement de courbe en utilisant à la fois les signaux à trajets directs sélectionnés et les signaux à trajets multiples sélectionnés dans le domaine complexe pour ainsi déterminer un état de moment d'arrivée associé aux signaux DSSS de bande de base reçus.

3. Récepteur DSSS selon la revendication 1, dans lequel :

le circuit de réception de bande de base comporte des circuits destinés à recevoir les signaux DSSS de bande de base au niveau d'une série de fréquences différentes sur un étalement de fréquence qui accroît l'éventualité d'apparition dudit angle arbitraire approchant la condition de quadrature.

4. Procédé d'atténuation d'une distorsion due à la propagation par trajets multiples dans une détermination d'une condition de moment d'arrivée dans un système DSSS, comprenant les étapes consistant à :

recevoir un signal à trajets directs ;
recevoir un signal à trajets multiples ;
déterminer une fonction de corrélation complexe en utilisant des composants complexes des deux signaux à trajets directs et à trajets multiples ;
effectuer un ajustement de courbe sur la fonction de corrélation complexe pour localiser un pic de corrélation provoqué par le signal à trajet direct et un autre pic de corrélation provoqué par le signal à trajets multiples ;
mesurer un angle de phase du composant à trajets multiples relativement à un angle de phase du composant à trajet direct ;
détecter une condition dans laquelle ledit angle de phase mesuré approche une condition de quadrature ;
et déterminer la condition de moment d'arrivée uniquement lorsque ladite condition de quadrature approchée est détectée.

5. Procédé selon la revendication 4, comportant en outre l'étape consistant à :

forcer la condition de quadrature approchée à se produire
dans laquelle l'étape de forçage comporte :

la réception de signaux DSSS de bande de base au niveau d'une série de fréquences différentes sur un étalement de fréquences qui accroît l'éventualité d'apparition dudit angle arbitraire approchant la condition de quadrature.

6. Récepteur DSSS, selon la revendication 1, dans lequel :

lesdits signaux DSSS de bande de base comportent un signal à trajet direct dévié par une condition environnementale afin de produire un ou plusieurs signaux à trajets multiples supplémentaires reçus selon des angles de phase arbitraires en ledit signal à trajet direct ; et
le circuit processeur QMFR détermine l'état de moment d'arrivée associé aux signaux DSSS de bande de base reçus sur la base d'au moins un parmi :

a) des lectures des signaux à trajets directs et à trajets multiples réalisées à des moments où une détection des angles de phase arbitraires indique que lesdits angles de phase arbitraires ont approché une condition de quadrature, et
b) des lectures des signaux à trajets directs et à trajets multiples d'angles réalisées après forçage desdits angles de phase arbitraires afin d'approcher une condition de quadrature.

7. Récepteur DSSS selon la revendication 6, dans lequel :

ledit processeur QMFR détermine ledit état de moment d'arrivée sur la base desdites deux lectures a) et b).

8. Récepteur DSSS selon la revendication 6, dans lequel :

ledit processeur QMFR sélectionne lesdites lectures a) ou b) sur la base d'une caractéristique de ladite condition environnementale.

9. Récepteur DSSS selon la revendication 8, dans lequel :

ledit processeur QMFR caractérisant en outre lesdits circuits de réception de bande de base est stationnaire ou mobile et sélectionne lesdites lectures a) ou b) sur la base de ladite caractérisation stationnaire ou mobile.

10. Récepteur DSSS selon la revendication 1, comportant en outre un émetteur DSSS comprenant :

une entrée de signal afin de recevoir un premier signal ;
un codeur destiné à accepter le premier signal et à coder le premier signal selon un codage DSSS ; et
un émetteur destiné à transmettre le premier signal codé au niveau d'une série de fréquences de telle manière que l'étalement de ces fréquences soit suffisant afin de forcer au moins une condition proche d'une quadrature de se produire dans l'éventualité d'une condition à trajets multiples.

**GPS SATELLITE**

FIGURE 1

PRIOR ART [Spilker, et al, "overview of GPS generation and Design," Global Positioning System, Theory and applications. Vol. 1, A1AA Vol. 163, p.53].

EP 1 275 975 B1

FIGURE 2

PRIOR ART [Brenner, et al, " GPS Landing System Multipath Evaluation Techniques and results," on GPS-98, p.1000, Nashville, TN. September 15-18, 1998].

Multipath power = 10% of direct path power

FIGURE 3

PRIOR ART [Brenner, et al at p.1000].

FIGURE 4

PRIOR ART    [Brenner, et al at p.1000].

**1 chip sample spacing**

**0.1 chip sample spacing**

FIGURE 5

PRIOR ART

## Multipath Error for Single Diffractor, Narrow Corr.

m    Multipath error $\eta$ D

amplitude ratio a = 0.1

In phase

out of phase

Delay $\Delta\xi$ in meters

FIGURE 6

PRIOR ART    [Brenner, et al at p.1005].

FIGURE 7

PRIOR ART

EP 1 275 975 B1

| PARAMETER | STANDARD P(Y) (20 MHz BW) | NARROW-CORRELATOR (Hypothetical 80 MHz BW) |
|---|---|---|
| Ranging Precision (m) | 0.28 | 0.22 |
| Ground Multipath (m) | 0.60 | 0.23 |
| Aircraft Multipath (m) | 0.14 | 0.14 |
| Receiver Error – RSS (m) | 0.68 | 0.34 |

FIGURE 8

PRIOR ART  [Karels, et al ,"Extending Narrow-Correlator Technology to P(Y)- code Receivers: Benefits and Issues", ION, GPS-94, September 20-23, 1994].

FIGURE 9

FIGURE 10

## CONSTRUCTIVE INTERFERENCE BETWEEN MULTIPATH AND MAIN PATH CAUSES EARLY LEADING-EDGE CURVE FIT TOA ESTIMATE

FIGURE 11

FIGURE 12

Angle Between Main Path and Multipath = 90 degrees

FIGURE 13

MAXIMUM AMPLITUDE
OF MAIN PATH

Angle Between Main Path and Multipath = 90 degrees

NO INTERFERENCE
FROM MULTIPATH

FIGURE 14

EP 1 275 975 B1

EP 1 275 975 B1

Angle Between Main Path and Multipath = 120 degrees

FIGURE 15

REDUCED AMPLITUDE
OF MAIN PATH

Angle Between Main Path and Multipath = 120 degrees

NO INTERFERENCE
FROM MULTIPATH

FIGURE 16

## DESTRUCTIVE INTERFERENCE BETWEEN MULTIPATH AND MAIN PATH CAUSES LATE LEADING-EDGE CURVE FIT TOA ESTIMATE

FIGURE 17

FIGURE 18

EP 1 275 975 B1

FIGURE 19

FIGURE 20

| User Type ⇒<br><br>Multipath<br>Environment ⇓ | Stationary;<br>SV-Only;<br><br>CA-Code | Mobile;<br>SV-Only;<br><br>CA-Code | Stationary;<br>SV-Only<br>+20 dB;<br>M-Code | Stationary;<br>SV plus<br>L-Band PL;<br>MF M-Code | Stationary;<br>SV plus<br>UHF PL;<br>MF M-Code |
|---|---|---|---|---|---|
| Ground reflection | Q1-FTA<br>Q1-LEA<br>Q2-NIHAM | Q1-FTA<br>Q2-NIHAM | Q1-FTA<br>Q1-LEA<br>Q2-NIHAM | Q2-NIHAM | Q2-NIHAM |
| Dominant single reflector | Q1-FTA<br>Q1-LEA<br>Q2-NIHAM | Q1-FTA<br>Q2-NIHAM | Q1-FTA<br>Q1-LEA<br>Q2-NIHAM | Q2-NIHAM | Q2-NIHAM |
| Diffuse multipath | NB | NB | NB | NB | NB |
| Urban canyon | NB | NB | When direct path thru buildings:<br>Q1-FTA<br>Q2-NIHAM | When direct path thru buildings:<br>Q2-NIHAM | Q2-NIHAM |
| Inside building | NB | NB | When adequate signal strength:<br>Q1-FTA<br>Q2-NIHAM | When adequate signal strength:<br>Q2-NIHAM | Q2-NIHAM |

Q1 = Recognize quadrature condition
Q2 = Force quadrature condition via MF transmission
FTA = Faster than averaging
LEA = Lower elevation angles

NIHAM = Near-instantaneous high-accuracy measurement
NB = No benefit
PL = Pseudolite
MF = Multiple-Frequency

FIGURE 21

| User Type ⇒<br><br>Multipath<br>Environment<br>⇓ | Stationary;<br>SV-Only;<br><br>CA-Code | Mobile;<br>SV-Only;<br><br>CA-Code | Stationary;<br>SV-Only<br>+20 dB;<br>M-Code | Stationary;<br>SV plus<br>L-Band PL;<br>MF M-Code | Stationary;<br>SV plus<br>UHF PL;<br>MF M-Code |
|---|---|---|---|---|---|
| Ground<br>reflection | ANT<br>QMFR | QMFR | ANT<br>QMFR | QMFR<br>ANT | QMFR<br>ANT |
| Dominant<br>single<br>reflector | ANT<br>QMFR | QMFR | ANT<br>QMFR | QMFR<br>ANT | QMFR<br>ANT |
| Diffuse<br>multipath | | | | | |
| Urban<br>canyon | IA | IA | IA<br>QMFR[1] | IA<br>QMFR[1] | QMFR<br>IA |
| Inside<br>building | IA | IA | IA<br>QMFR[2] | IA<br>QMFR[2] | QMFR<br>IA |

ANT = Multipath-resistant antenna technology

IA = Inertial Aiding

Note 1: When direct path or direct path through building is available.

Note 2: When signal strength is adequate.

FIGURE 22

EP 1 275 975 B1

**FIGURE 23**

## TOA Results

| MP delay (ns) | MP/DP (dB) | Accuracy (ns) |
|---|---|---|
| DP | NA | 1.6 |
| 8 | 8 | 2.7 |
| 15 | 0 | 3.2 |
| 15 | 8 | 4.8 |
| 30 | 0 | 1.5 |

Delay cal accuracy = +-.5ns

**Experimental Setup Used to Verify QMFR**
- SUO radios cabled together with a direct path (DP) and a single multipath (MP)
- MP amplitude and delay were varied while taking data with logic analyzers for non-real time processing on the personal computers (PC)
- Time delays were varied using varying lengths of cable
- TOA accuracy results are summarized in the above table

SUO=Small Unit Operations (radio)
ATT=attenuator
ADC=analog-to-digital converter
TD=time delay
TT=time tag